Europäisches Patentamt

European Patent Office

Office européen des brevets

(19)

(11) Numéro de publication : **0 188 164**
**B1**

(12) **FASCICULE DE BREVET EUROPÉEN**

(45) Date de publication du fascicule du brevet :
15.03.89

(51) Int. Cl.⁴ : **B 62 D  1/04**, B 62 D   1/16,
B 60 K 35/00

(21) Numéro de dépôt : **85402658.0**

(22) Date de dépôt : **31.12.85**

(54) **Bloc de direction de véhicule automobile, comportant un coussin central fixe.**

(30) Priorité : 07.01.85 FR 8500141
30.09.85 FR 8514468

(43) Date de publication de la demande :
23.07.86 Bulletin 86/30

(45) Mention de la délivrance du brevet :
15.03.89 Bulletin 89/11

(84) Etats contractants désignés :
DE FR GB IT SE

(56) Documents cités :
FR–A– 1 571 756
FR–A– 2 488 562
FR–A– 2 541 644
PATENT ABSTRACTS OF JAPAN, vol. 7, no. 223 (M-247) [1368], 4th October 1983

(73) Titulaire : **ECIA - EQUIPEMENTS ET COMPOSANTS POUR L'INDUSTRIE AUTOMOBILE**

**F-25400 Audincourt (Doubs) (FR)**

(72) Inventeur : **Henigue, Christian**
**6 rue des Vosges**
**F-90100 Suarce (FR)**
Inventeur : **Bertot, Maurice**
**3 rue du Quinze-Deux**
**F-70300 Luxeuil-les-Bains (FR)**

(74) Mandataire : **Bressand, Georges et al**
**c/o CABINET LAVOIX 2 Place d'Estienne d'Orves**
**F-75441 Paris Cedex 09 (FR)**

Il est rappelé que : Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

EP 0 188 164 B1

## Description

La présente invention concerne un bloc de direction de véhicule automobile comportant un coussin central fixe par rapport à la jante mobile d'un volant de direction, tel que défini dans le préambule de la revendication 1 et connu par exemple par JP-A-58 118 455.

Sur ce coussin central sont disposés, par exemple, des organes de commande électrique de type connu, destinés à la commande de différents organes du véhicule à partir du volant de direction. Ainsi, on peut prévoir la commande électrique de projecteurs, d'indicateurs de changement de direction, etc., à partir du coussin central.

Il existe, dans l'état de la technique, différents dispositifs permettant de rendre fixe la partie centrale d'un volant de direction par rapport à la jante mobile.

Ainsi par exemple, on connaît d'après l'abrégé de brevet japonais vol. 7 n° 223 (M-247) [1368], du 4 Octobre 1983 et le brevet JP-A-58 118 455, du 14 Juillet 1983, un bloc de direction de véhicule automobile comportant un coussin central fixe. Dans ce bloc de direction, le volant est solidaire d'une première partie d'arbre de direction dont l'une des extrémités présente un organe menant coopérant avec un premier organe d'accouplement intermédiaire d'un dispositif de transmission intermédiaire. Ce dispositif de transmission comporte également un second organe d'accouplement intermédiaire qui coopère avec un organe mené solidaire d'une seconde partie d'arbre de direction. Le coussin central est fixé sur l'une des extrémités d'un cylindre disposé à l'intérieur de la première partie de l'arbre de direction, l'autre extrémité de ce cylindre étant fixée sur la colonne de direction du véhicule.

Le document FR-A-1 571 756, décrit un dispositif de montage d'organes de commande dans un véhicule routier. Ce dispositif est caractérisé en ce qu'il comprend un train d'engrenages en prise à l'une de ses extrémités, avec une colonne de direction du véhicule et comportant un support fixé rigidement à la carrosserie du véhicule, un tableau supportant des organes de commande du véhicule et fixe par rapport audit support, et un volant de direction entourant ledit tableau et en prise avec l'autre extrémité du train d'engrenages afin de tourner par rapport audit support, le volant étant coaxial à la colonne de direction et le train d'engrenages étant tel que la rotation du volant dans un sens provoque une rotation de la colonne de direction dans le même sens.

Le document FR-A-2 488 562, décrit un mécanisme de direction pour un véhicule automobile. La Fig. 1 de ce document représente un mécanisme connu de direction, comportant une première et une seconde parties d'arbre de direction, reliées entre elles par l'intermédiaire d'engrenages droits, les première et seconde parties d'arbre de direction étant décalées l'une par rapport à l'autre, pour permettre de sortir, de ladite première partie d'arbre de direction, un organe de transmission des informations.

Enfin, on connaît par le document FR.2 541 644, un bloc de direction pour véhicules, comprenant un tableau de bord intégré stationnaire.

Ce bloc de direction comporte deux pignons planétaires dont l'un est solidaire de la partie fixe du véhicule et l'autre, de la partie centrale du volant, que l'on se propose de rendre stationnaire. Ceci est réalisé au moyen de deux pignons satellites qui sont maintenus en prise avec des pignons planétaires. La transmission des informations issues des organes de commande électrique montés sur le tableau de bord, est assurée par un câble comportant des spirale constituées chacune de plusieurs spires enroulées lâchement dans des logements prévus sur la partie fixe du véhicule et le tableau de bord intégré.

Cependant, la structure de ces dispositifs est telle qu'elle nécessite des pièces de conception et de réalisation complexes, ce qui entraîne que la fabrication de tels dispositifs est très délicate et onéreuse. En effet, la structure des dispositifs connus impose des tolérances de fabrication très serrées et des ajustements précis des différentes pièces utilisées, pour que le jeu au niveau de la transmission ne soit pas trop important, ce qui a pour effet d'augmenter le prix de revient du dispositif.

De plus, il subsiste, dans certains dispositifs de l'état de la technique, des risques de blocage du volant de direction, ce qui peut entraîner des conséquences extrêmement graves pour le véhicule ainsi que pour les passagers.

Enfin, l'augmentation de l'encombrement du volant, par l'adjonction de pignons à ce niveau, peut être indésirable à certains égards.

On connaît également d'après le document « Mashinenelemente » (G. Niemann, H. Winter ; Springer-Verlag), Band II, pages 366-367, des dispositifs de rattrapage de jeux d'engrenage. Cependant, les dispositifs décrits dans ce document présentent un certain nombre d'inconvénients au niveau du dimensionnement des éléments d'engrenage qui doivent être adaptés pour assurer la transmission de la totalité de l'effort.

Un but de la présente invention est de proposer un bloc de direction permettant d'assurer la transmission des informations issues d'organes de commande montés sur un coussin central fixe par rapport à la jante mobile d'un volant qui soit de conception simple et n'impose pas de précisions de fabrication élevées, de sorte que les coûts de fabrication d'un tel bloc de direction soient des plus faibles possibles.

Un autre but de la présente invention est de proposer un bloc de direction permettant d'assurer une transmission du mouvement de rotation du volant de direction avec une meilleure précision tout en éliminant les risques de blocage de celui-ci, augmentant ainsi la sécurité du véhicule et des passagers.

Un autre but de la présente invention est de proposer un bloc de direction dans lequel l'encombrement du volant reste sensiblement le même que celui d'un volant ne comportant pas de coussin central fixe.

Un autre but de la présente invention est de proposer un bloc de direction dont le montage soit facile et adapté à une fabrication en grande série.

A cet effet, l'invention a pour objet un bloc de direction d'un véhicule automobile, comprenant une colonne de direction, un volant de direction et un coussin central sur lequel est disposé au moins un organe de commande destiné à la commande de différents organes du véhicule, ladite colonne de direction et ledit coussin central étant fixes, le volant de direction étant solidaire d'une première partie d'un arbre de direction, creuse et montée à rotation autour d'une pièce tubulaire solidaire de la colonne de direction et du coussin central, et dans laquelle est disposée un organe de transmission des informations issues dudit au moins un organe de commande, vers une partie fixe du véhicule, ladite première partie d'arbre de direction étant reliée à une seconde partie d'arbre de direction, par l'intermédiaire d'un dispositif d'accouplement, comprenant un premier organe d'accouplement intermédiaire coopérant avec un organe menant solidaire de la première partie d'arbre de direction de manière à former un premier couple, et un second organe d'accouplement intermédiaire coopérant avec un organe mené solidaire de la seconde partie d'arbre de direction de manière à former un second couple, lesdites première et seconde parties d'arbre de direction étant espacées d'une distance permettant le passage de l'organe de transmission des informations, caractérisé en ce que les organes d'au moins l'un des couples sont constitués par des pignons hélicoïdaux, l'un étant constitué par deux pignons hélicoïdaux sollicités dans des directions opposées, parallèles à l'axe du dispositif d'accouplement par l'intermédiaire de moyens élastiques disposés entre les deux pignons, pour constituer des moyens de rattrapage automatique des jeux de transmission dudit dispositif d'accouplement.

D'autres avantages et caractéristiques de l'invention apparaîtront au cours de la description qui va suivre, faite en se référant aux dessins annexés, donnés uniquement à titre d'exemple et sur lesquels :

— la Fig. 1 représente une vue en coupe d'un premier mode de réalisation d'un bloc de direction selon la présente invention ;

— la Fig. 2 représente une vue en coupe d'un dispositif de fixation d'un coussin central et d'un volant de direction, entrant dans la constitution d'un bloc de direction selon l'invention ;

— la Fig. 3 représente un ensemble de direction de l'état de la technique ;

— la Fig. 4 représente un second mode de réalisation d'un bloc de direction selon l'invention ;

— la Fig. 5 représente un troisième mode de réalisation d'un bloc de direction selon l'invention ;

— la Fig. 6 représente un quatrième mode de réalisation d'un bloc de direction selon l'invention ;

— la Fig. 7 représente une vue schématique de dessus du bloc de direction représenté sur la Fig. 6 ;

— la Fig. 8 représente un cinquième mode de réalisation d'un bloc de direction selon l'invention ; et

— la Fig. 9 représente un sixième mode de réalisation d'un bloc de direction selon l'invention.

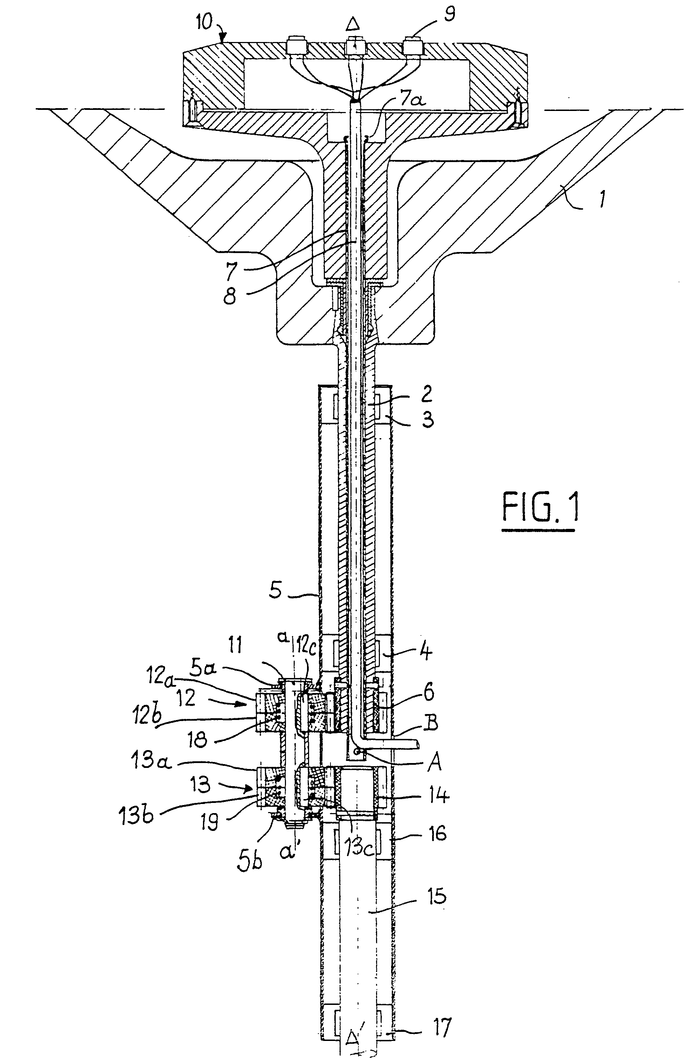

Sur la Fig. 1, on a représenté un bloc de direction comportant un volant de direction 1 qui est rendu solidaire d'une première partie creuse 2 d'un arbre de direction, d'une manière qui sera décrite ci-après.

La première partie 2 de l'arbre de direction est montée à rotation dans des paliers 3 et 4 solidaires d'une colonne de direction fixe 5.

Un organe menant 6, qui peut avantageusement être un pignon hélicoïdal, est fixé, par tout moyen approprié, à l'extrémité inférieure de la partie 2 de l'arbre de façon à en être solidaire en rotation.

Une pièce tubulaire 7, comportant à son extrémité supérieure des organes de retenue élastiques 7a, est disposée à l'intérieur de la partie 2 de l'arbre, avec un jeu fonctionnel, de sorte que cette partie 2 d'arbre peut tourner autour de la pièce tubulaire 7, qui est rendue solidaire de la colonne de direction 5 en un point A par une goupille ou tout autre moyen approprié.

Un câble électrique 8 comportant des fils dont l'une des extrémités est reliée à des organes de commande 9 montés sur un coussin central 10, est disposé à l'intérieur de la pièce tubulaire 7. Ce câble sort obliquement à l'extrémité inférieure de la pièce tubulaire 7 et débouche de la colonne de direction fixe 5, par une ouverture ménagée en B.

La colonne de direction 5 présente deux rebords 5a et 5b faisant saillie, à angle droit, vers l'extérieur et disposés en regard l'un de l'autre. Des trous sont percés dans ces rebords 5a et 5b de manière à recevoir un organe de transmission 11 se présentant sous la forme d'un arbre cylindrique. Cet organe de transmission 11 est monté à rotation de manière connue en soi entre les rebords 5a et 5b.

Selon le mode de réalisation représenté, l'axe aa' de l'organe de transmission 11 est parallèle à l'axe $\Delta$-$\Delta'$ de la première partie 2 de l'arbre de direction.

Cet organe de transmission 11 peut donc tourner autour de son axe a-a' mais est fixe en rotation par rapport à l'axe de la colonne de direction.

Un organe d'accouplement 12, qui peut avantageusement se présenter sous la forme de deux pignons hélicoïdaux 12a et 12b, est disposé à l'une des extrémités de l'organe de transmission 11, en regard de l'organe menant 6 de façon à coopérer avec celui-ci.

Les pignons hélicoïdaux 12a et 12b sont rendus solidaires en rotation de l'organe de transmission 11 par une clavette 12c ou tout autre moyen approprié, autorisant un déplacement parallèle à l'axe a-a' de l'organe 11, du pignon 12a par rapport au pignon 12b.

Un organe d'accouplement 13, qui peut avantageusement se présenter sous la même forme que l'organe d'accouplement 12, c'est-à-dire sous la forme de deux pignons hélicoïdaux 13a et 13b est disposé à l'autre extrémité de l'organe de transmission 11 de façon à coopérer avec un organe mené 14 solidaire d'une seconde partie 15 de l'arbre de direction. Cette seconde partie 15 de l'arbre est montée à rotation dans des paliers 16 et 17 solidaires de la colonne de direction 5.

Une clavette 13c rend les pignons hélicoïdaux 13a et 13b solidaires en rotation de l'organe de transmission 11, mais les pignons 13a et 13b peuvent également se déplacer l'un par rapport à l'autre de la même manière que les pignons 12a et 12b.

Les pignons 12a, 12b, 13a, 13b constituant les organes d'accouplement intermédiaires 12 et 13, comportent sur leurs surfaces en regard, un évidement annulaire formant un logement pour des organes élastiques tels que des ressorts 18 et 19 respectivement, conformés pour écarter les pignons de chaque organe d'accouplement. Ce montage constitue un dispositif de rattrapage de jeu, comme on le verra ci-après.

Dans le mode de réalisation représenté, la seconde partie 15 de l'arbre de direction est alignée avec la première partie 2 de l'arbre de direction, cependant, d'autres configurations sont envisageables.

Il est à noter que le rapport de transmission entre la première partie et la seconde partie de l'arbre de direction peut avantageusement être égal à 1.

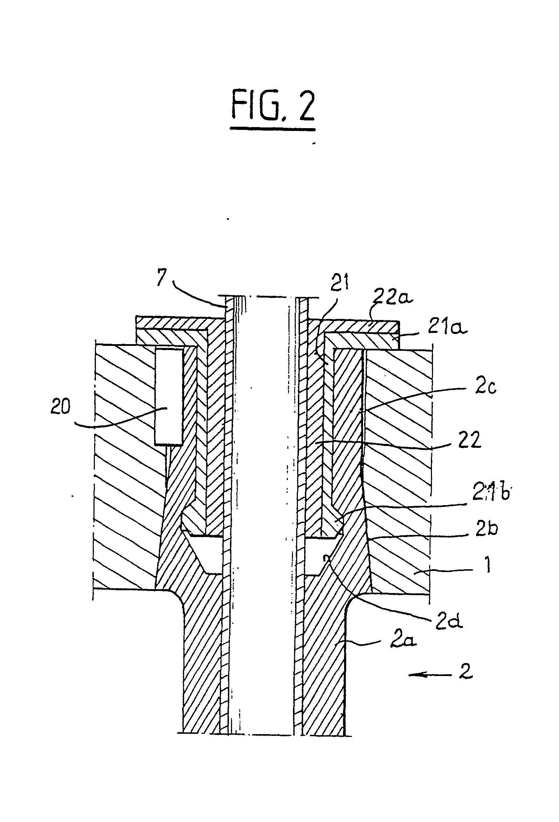

Sur la Figure 2, on a représenté un dispositif de fixation du volant de direction 1 sur la première partie 2 de l'arbre de direction.

La première partie 2 de l'arbre de direction se présente sous la forme d'une pièce tubulaire 2a dont l'extrémité est constituée par une section de forme extérieure tronconique 2b surmontée d'une section cylindrique 2c.

La paroi interne de la partie 2 de l'arbre présente, au niveau de sa partie tronconique 2b, un évidement annulaire 2d.

Le volant 1 présente un évidement central dont les surfaces viennent coopérer avec les surfaces extérieures de la partie 2 de l'arbre, lorsque le volant est placé sur cette partie 2 de l'arbre.

Un certain jeu subsiste entre le volant 1 et la partie 2 de l'arbre de direction au niveau de la partie cylindrique 2c. Une clavette 20 est disposée entre la partie d'arbre 2 et le volant 1 au niveau de la partie cylindrique 2c, de façon à rendre solidaire en rotation ces deux organes.

Un premier manchon 21 comporte à l'une de ses extrémités une collerette 21a faisant saillie vers l'extérieur et s'étendant au-dessus de l'extrémité de la partie d'arbre 2 et d'une partie du volant 1. Ce manchon 21 comporte à son autre extrémité un bossage annulaire 21b dont les surfaces viennent coopérer avec les surfaces correspondantes de l'évidement annulaire 2d. Cette pièce est donc emmanchée à force dans la partie d'arbre 2 de façon à solidariser en translation le volant 1 et la partie d'arbre de direction 2.

Un second manchon 22, comportant à l'une de ses extrémités une collerette 22a faisant saillie vers l'extérieur, est disposée autour de la pièce tubulaire 7 de façon à presser le manchon 21 contre l'intérieur de la première partie 2 de l'arbre de direction.

Lors du montage, le volant de direction 1 est emmanché sur la première partie 2 de l'arbre de direction de façon que la clavette 20 rende solidaire en rotation ledit volant et ladite partie de l'arbre.

Les manchons 21 et 22, respectivement, sont ensuite disposés à force en position de manière à prévenir tout déplacement en translation du volant de direction 1 par rapport à ladite première partie 2 de l'arbre.

Enfin, le coussin central 10 est glissé sur la pièce tubulaire 7 de manière que les organes de retenue élastiques 7a maintiennent en position le coussin central.

Ainsi, lorsque l'on tourne le volant de direction 1, la première partie 2 de l'arbre de direction est entraînée en rotation au moyen de la clavette 20, tandis que la pièce tubulaire 7 reste fixe car elle est solidaire de la colonne de direction 5 comme on l'a déjà indiqué.

Le mouvement de rotation est transmis à l'organe de transmission 11 par l'intermédiaire de l'organe menant 6 qui coopère à l'organe d'accouplement respectif 12. L'organe de transmission 11 transmet par l'intermédiaire de l'organe d'accouplement 13, le mouvement de rotation, à l'organe mené 14 solidaire de la deuxième partie 15 de l'arbre de direction.

La pièce tubulaire 7 étant maintenue fixe par rapport à la colonne de direction, le coussin central 10 et les organes de commande 9 qui en sont solidaires sont donc stationnaires par rapport au volant de direction 1.

On peut noter que si les pignons 6, 12a, 12b, 13a, 13b et 14 sont des pignons droits, les jeux angulaires de denture se répercutent deux fois (6-12a, 12b + 13a, 13b-14), ce qui peut amener une gêne de conduite car il est impensable de construire économiquement en grande série, des trains d'engrenages à jeux réduits. De plus, l'utilisation de tels pignons peut être dangereuse car la présence d'une particule de corps étranger, si petite soit elle, dans le train d'engrenages peut provoquer le blocage de la direction.

Selon un mode avantageux de réalisation de la présente invention, les pignons 6, 12a, 12b et 13a, 13b, 14 sont calculés de sorte qu'un jeu normal d'engrènement existe pour un entraxe aa'-ΔΔ' pouvant varier dans des tolérances normales, ce qui permet de travailler avec des tolérances que l'on peut qualifier de larges. Ainsi, les prix de revient sont minimisés.

Selon ce mode avantageux de réalisation, tous les pignons 6, 12a, 12b, 13a, 13b et 14 sont hélicoïdaux. Les pignons 12a, 12b et 13a, 13b sont liés en rotation à l'organe de transmission 11 par un dispositif permettant un déplacement parallèle à l'axe aa' de l'organe de transmission 11, des pignons 12a et 12b l'un par rapport à l'autre et des pignons 13a et 13b l'un par rapport à l'autre.

Ce déplacement est en fait un écartement des pignons de l'un par rapport à l'autre, provoqué par l'interposition entre chaque paire de pignons d'un ressort semblable 18 et 19.

Cet écartement forcé des pignons sous l'action des ressorts crée automatiquement un rattrapage de jeu et permet ainsi une conduite précise et agréable.

Les trains d'engrenages sont calculés de façon classique pour obtenir le meilleur fonctionnement cinématique, en général par l'égalisation des vitesses de glissement en pied de dents et d'autres procédés connus.

Ainsi, le module n'est pas inférieur à 2 mm pour obtenir un coefficient de sécurité élevé nécessaire dans une direction de véhicule automobile. Pour limiter l'encombrement des pignons, ceux-ci sont en général à petit nombre de dents, inférieur ou voisin du nombre limite provoquant l'interférence de taillage.

Par exemple :

$M = 2$ ;

angle de pression 20° ;

angle d'hélice 20° ;

les pignons 12a, 12b, 13a, 13b possèdent 17 ou 18 dents ;

les pignons 11 et 14 possèdent 23 dents ;

L'entraxe théorique 31, 925 ou 32, 723 est augmenté à 32, 85 ou 32, 05 avec un entraxe de fonctionnement calculé de 32,8 ou 32.

Afin d'apporter une sécurité supplémentaire et de permettre une meilleure accumulation par rejet dans les vides d'engrènement des corps étrangers, la saillie est réduite à 85 ou 90 % de la saillie théorique au plus, tant que le rapport de conduite additionné au rapport de recouvrement est compris entre 1,3 minimum et 1,95 maximum.

Le mode de réalisation décrit est le cas où les première et seconde parties de l'arbre de direction sont alignées. Cependant, on peut, en utilisant un dispositif analogue, placer la seconde partie de l'arbre de direction dans une autre position.

Les axes des pignons 6 et 14 restent parallèles, mais on peut les décaler d'un angle α autour de l'axe aa', ce qui permet des implantations plus faciles, tant du volant par rapport au conducteur du véhicule que du pignon 14 par rapport au volant de direction 1.

Dans ce premier mode de réalisation, on a coupé volontairement l'arbre de direction en deux parties, renvoyé le mouvement de rotation de celui-ci sur un train d'engrenages à axe parallèle et sorti l'organe de transmission des informations, reliant le coussin central fixe, monté au centre du volant, à une partie fixe du véhicule, au droit de ce renvoi.

Or, on sait que pour des questions d'implantation, tant du volant, liée au confort de conduite, que du boîtier de direction, liée à la cinématique de direction, et pour des impératifs de nationalité (conduite à droite ou à gauche), l'arbre de direction de la plupart des véhicules automobiles comporte plusieurs parties, par exemple trois, reliées entre elles par des systèmes généralement semblables constitués de joints de cardan classiques ou de joints utilisant la déformation d'une pièce élastique en général à base d'élastomère.

Il est donc intéressant d'utiliser l'une de ces interruptions de l'arbre de direction pour sortir l'organe de transmission des informations, de cet arbre de direction et du même coup, diminuer le prix de revient d'un tel dispositif en remplaçant par exemple l'un des joints de cardan par un dispositif d'engrenages équivalent à celui décrit précédemment.

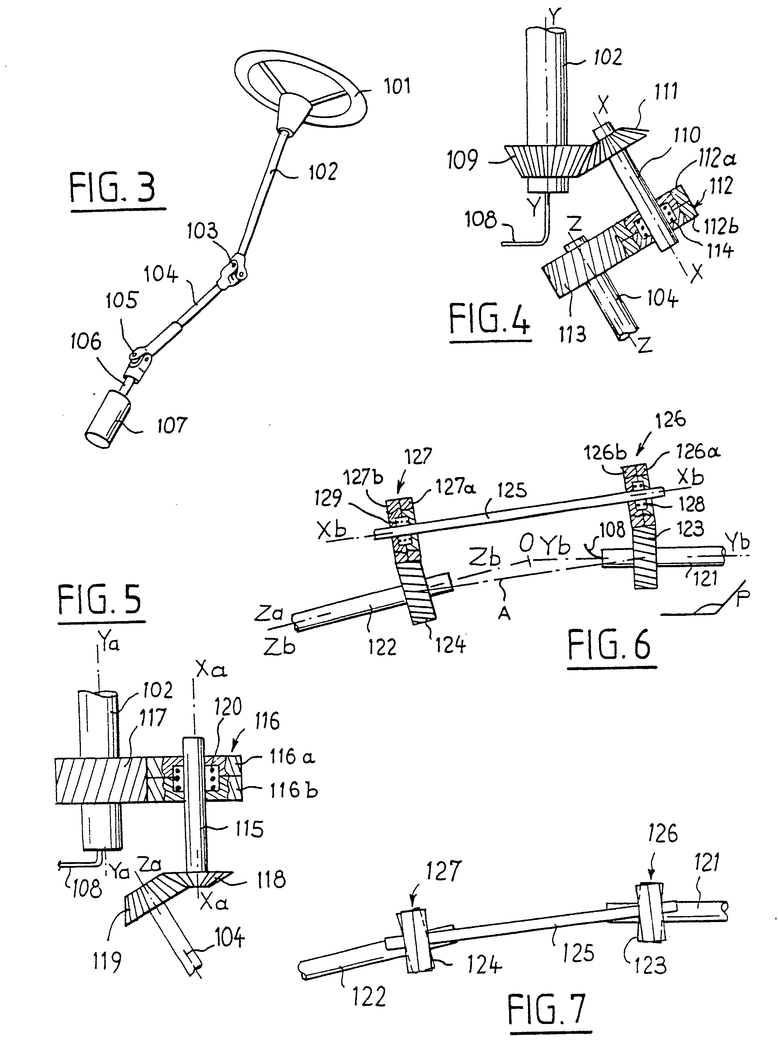

Ainsi qu'on peut le voir sur la Fig. 3, un tel ensemble de direction comporte un volant 101 relié à l'une des extrémités d'une première partie d'arbre de direction 102 dont l'autre extrémité est reliée par exemple par un joint de cardan 103 à une extrémité d'une seconde partie d'arbre de direction 104 dont l'autre extrémité est elle-même reliée par exemple par un joint de cardan 105, à une troisième partie d'arbre de direction 106 reliée à un boîtier de direction 107.

Il est à noter que les première et seconde ainsi que les seconde et troisième parties d'arbre de direction font entre elles un angle obtus, l'angle obtus devant être considéré dans le présent mémoire comme un angle supérieur à 90° et différent de 180°.

Un coussin central (non représenté) est disposé au centre du volant de manière identique à celle décrite précédemment. Ce coussin central comporte au moins un organe de commande destiné à la commande de différents organes du véhicule, ces organes de commande étant reliés à un organe de transmission des informations issues dudit au moins un organe de commande vers une partie fixe du véhicule. Comme on peut le voir sur la Fig. 4, cet organe de transmission 108, constitué par exemple par un câble électrique, est disposé dans la première partie 102 de l'arbre de direction, cette partie d'arbre de direction étant creuse et montée à rotation autour d'une pièce tubulaire (non représentée) solidaire de la colonne de direction et du coussin central.

Cette première partie 102 de l'arbre de direction est reliée à la seconde partie 104 de celui-ci, par l'intermédiaire d'un dispositif d'accouplement intermédiaire comprenant un organe menant 109 solidaire de la première partie de l'arbre de direction, un organe de transmission 110 rotatif autour de son axe X-X et fixe en rotation par rapport à l'axe de la colonne de direction. Cet organe de transmission 110 porte des organes d'accouplement intermédiaires dont l'un, 111, coopère avec l'organe menant 109 et l'autre, 112, avec un organe mené, 113, solidaire de la seconde partie 104 de l'arbre de direction.

Il est à noter que les première et seconde parties de l'arbre de direction sont séparées d'une distance permettant le passage de l'organe de transmission des informations 108. L'axe Y-Y de la première partie de l'arbre de direction fait avec l'axe Z-Z de la seconde partie, un angle obtus tel qu'il a été défini précédemment.

Dans le mode de réalisation représenté sur cette Fig. 4, l'axe X-X de l'organe de transmission 110 est parallèle à l'axe Z-Z de la seconde partie 104 de l'arbre de direction et est disposé dans un plan défini par les axes Y-Y et Z-Z desdites première et seconde parties d'arbre de direction.

Dans le cas où l'axe X-X de l'organe de transmission est parallèle à l'axe Z-Z de la seconde partie de l'arbre de direction, l'organe menant 109 et l'organe d'accouplement intermédiaire 111 coopérant avec celui-ci sont constitués par des pignons coniques de demi-angle au sommet égal à la moitié dudit angle obtus et l'organe mené 113 et l'organe d'accouplement intermédiaire 112 coopérant avec celui-ci sont constitués par des pignons hélicoïdaux.

Avantageusement, l'organe d'accouplement intermédiaire 112 peut être constitué par deux pignons hélicoïdaux 112a et 112b dont les surfaces en regard sont pourvues d'un évidement annulaire dans lequel sont disposés des moyens élastiques 114 tendant à écarter les deux pignons, ces pignons étant libres de se déplacer l'un par rapport à l'autre, parallèlement à l'axe X-X de l'organe de transmission 110 comme cela a été décrit précédemment.

Ceci permet de rattraper les jeux angulaires de denture qui peuvent entraîner une gêne de conduite, car, comme il a déjà été mentionné, il est impensable de construire économiquement en grande série, des trains d'engrenages à jeu réduit.

Dans le mode de réalisation décrit sur la Fig. 4, l'axe X-X de l'organe de transmission est parallèle à l'axe Z-Z de la seconde partie de l'arbre de direction. Cependant, on peut également envisager un dispositif dans lequel l'axe Xa-Xa (Fig. 5) d'un organe de transmission 115 est parallèle à l'axe Ya-Ya de la première partie 102 de l'arbre de direction, cet axe Ya-Ya faisant toujours un angle obtus avec l'axe Za-Za de la seconde partie 104 de l'arbre de direction.

L'organe de transmission 115 porte à l'une de ses extrémités, un organe d'accouplement intermédiaire 116 coopérant avec un organe menant 117 solidaire de la première partie de l'arbre de direction, et à l'autre de ses extrémités, un autre organe d'accouplement intermédiaire 118 coopérant avec un organe mené 119 solidaire de la seconde partie 104 de l'arbre de direction.

Dans ce cas, l'organe menant 117 et l'organe d'accouplement intermédiaire 116 coopérant avec celui-ci sont constitués par des pignons hélicoïdaux, tandis que l'organe mené 119 et l'organe d'accouplement intermédiaire 118 coopérant avec celui-ci, sont constitués par des pignons coniques de demi-angle au sommet égal à la moitié dudit angle obtus.

Avantageusement, l'organe d'accouplement intermédiaire 116 est constitué de manière identique à l'organe d'accouplement intermédiaire 112 représenté sur la Fig. 4, c'est-à-dire constitué de deux pignons hélicoïdaux 116a, 116b, libres de se déplacer l'un par rapport à l'autre, parallèlement à l'axe Xa-Xa de l'organe de transmission, et comportant sur leurs surfaces en regard un évidement annulaire dans lequel sont disposés des moyens élastiques 120 tendant à les écarter l'un de l'autre, de façon à rattraper les jeux de denture.

Dans ce cas également, l'axe Xa-Xa de l'organe de transmission intermédiaire est disposé dans un plan défini par les axes des première et seconde parties d'arbre de direction.

Les dispositifs représentés sur les Figs. 4 et 5 nécessitent une grande précision de réglage de l'engrènement des pignons coniques afin de limiter les jeux de transmission.

On peut également envisager une chaîne cinématique comportant quatre engrenages coniques assurant la transmission du mouvement entre la première partie de l'arbre de direction et la seconde partie. Dans ce cas, les organes menant et mené sont disposés par exemple à une distance égale du point d'intersection des axes des première et seconde parties d'arbre de direction de façon que les demi-angles au sommet des quatre pignons coniques soient égaux et permettent ainsi de standardiser une fabrication. L'axe de l'organe de transmission est alors parallèle à une droite joignant le centre des organes menant et mené.

Dans les modes de réalisation représentés sur les Figs. 4 et 5, l'axe de l'organe de transmission est disposé dans le plan défini par les axes des première et seconde parties de l'arbre de direction. On peut également disposer l'axe de cet organe de transmission dans un plan parallèle à celui défini par les axes des première et seconde parties d'arbre de direction. Ainsi sur la Fig. 6, on a représenté une première partie d'arbre de direction 121 d'axe Yb-Yb faisant un angle obtus tel que défini précédemment avec un axe Zb-Zb d'une seconde partie d'arbre de direction 122 et définissant avec celui-ci un plan P. Les première et seconde parties d'arbre de direction portent respectivement un organe menant 123 et un organe mené 124. Ces organes menant et mené sont disposés à une distance égale d'un point O d'intersection des axes Yb-Yb et Zb-Zb respectivement des première et seconde parties d'arbre de direction. Un organe de transmission 125 d'axe Xb-Xb est disposé dans un plan parallèle au plan P, l'axe Xb-Xb de cet organe de transmission étant parallèle à une droite A joignant le centre des organes menant et mené.

L'organe de transmission 125 porte à chacune de ses extrémités, un organe d'accouplement intermédiaire coopérant l'un, 126, avec l'organe menant 123 et l'autre, 127, avec l'organe mené 124.

Les organes menant, d'accouplement intermédiaires et mené, peuvent être constitués par différents types de pignons. Ainsi par exemple, ils peuvent être constitués par des pignons hélicoïdaux gauches, les plans perpendiculaires aux axes de rotation des pignons de chaque couple faisant entre eux un angle égal à la moitié de l'angle obtus que font entre eux les axes des première et seconde parties d'arbre de direction.

Les sens d'hélice des pignons constituant chaque couple, peuvent être différents et les angles d'hélice des pignons des couples doivent alors satisfaire à la relation :

$$\theta = \theta 1 - \theta 2$$

avec $\theta$ = valeur de l'angle obtus ; et
$\theta 1$ et $\theta 2$ = valeur des angles d'hélice des pignons de chaque couple.

Cependant, par souci de standardisation, il est avantageux d'utiliser le même sens d'hélice pour chaque pignon et les angles d'hélice des pignons de chaque couple doivent alors satisfaire à la relation :

$$\theta = \theta 1 + \theta 2.$$

On peut également envisager un cas particulier dans lequel l'un des pignons d'un ou de chaque couple est constitué par un pignon droit, c'est-à-dire que $\theta 1$ ou $\theta 2$ est égal à 0.

Cependant, il est particulièrement avantageux, pour des raisons de standardisation, d'utiliser des pignons hélicoïdaux gauches identiques, de même sens d'hélice et de même angle d'hélice égal à la moitié de l'angle obtus.

D'autre part, il est également avantageux d'utiliser un système de rattrapage de jeux analogue à celui décrit en regard de la Fig. 1. Dans ce cas, les organes d'accouplement intermédiaires 126 et 127 sont constitués chacun par deux pignons 126a, 126b et 127a, 127b, respectivement, présentant sur leurs surfaces en regard un évidement annulaire dans lequel sont disposés des moyens élastiques 128 et 129 respectivement qui tendent à écarter les pignons de chaque organe, l'un de l'autre, parallèlement à l'axe Xb-Xb de l'organe de transmission pour permettre un rattrapage du jeu de denture.

Ainsi qu'on peut le voir sur la Fig. 7, les plans perpendiculaires aux axes de rotation des pignons de chaque couple font entre eux un angle égal à la moitié de l'angle obtus.

Il est également à noter que dans tous les modes de réalisation, l'organe de transmission peut être relié à la colonne de direction de manière équivalente à celle décrite en se référant à la Fig. 1, c'est-à-dire par l'intermédiaire de rebords solidaires de celle-ci.

Dans tous les modes de réalisation décrits précédemment, le bloc de direction comporte un organe de transmission intermédiaire portant des organes d'accouplement intermédiaires, coopérant avec des organes menant et mené solidaires des première et seconde parties d'arbre de direction, ceci afin d'entraîner une rotation de la seconde partie d'arbre de direction dans le même sens que celle du volant, pour ne pas avoir à modifier la structure des moyens de conversion de la rotation de l'arbre de direction en déplacement linéaire d'un organe d'actionnement des roues directrices du véhicule.

En effet, l'organe de transmission intermédiaire tourne en sens inverse de celui du volant en raison de l'accouplement par pignons reliant la première partie d'arbre de direction et cet organe. De même, la seconde partie d'arbre de direction tourne en sens inverse de celui de l'organe de transmission et donc dans le même sens que celui de la première partie d'arbre de direction.

Cependant, il est également possible de modifier par exemple la structure des moyens de conversion précités pour qu'une rotation « inverse » de la seconde partie d'arbre de direction produise un déplacement linéaire de l'organe d'actionnement des roues, correspondant à la rotation de la première partie d'arbre de direction et donc du volant.

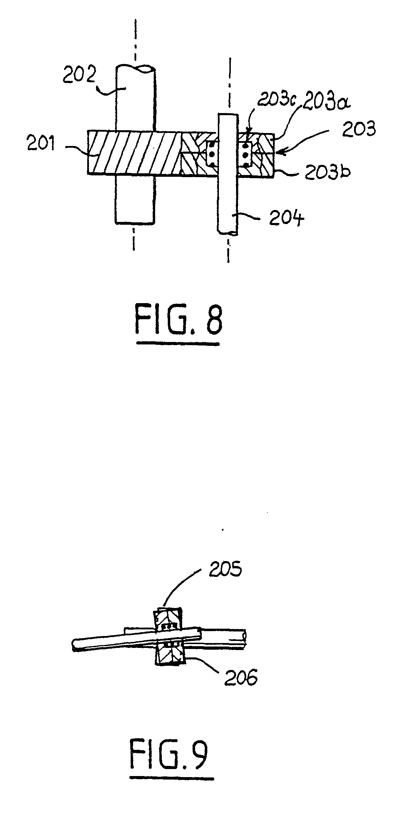

Ainsi, le dispositif d'accouplement reliant les première et seconde parties d'arbre de direction, peut être constitué (Fig. 8) par un organe menant 201 solidaire d'une première partie 202 d'arbre de direction solidaire d'un volant (non représenté), cet organe menant 201 coopérant avec un organe mené 203 solidaire d'une seconde partie 204 d'arbre de direction.

Dans le mode de réalisation représenté sur cette Fig., les axes des première et seconde parties d'arbre de direction sont parallèles. L'organe menant est par exemple constitué par un pignon hélicoïdal et l'organe mené par deux pignons hélicoïdaux 203a et 203b, dont les surfaces en regard comportent un évidement annulaire dans lequel sont disposés des moyens élastiques 203c constitués par exemple par un ressort, tendant à les écarter l'un de l'autre. Comme dans les modes de réalisation précédents, les pignons 203a et 203b sont montés déplaçables parallèlement à l'axe de la seconde partie d'arbre de direction pour constituer des moyens de rattrapage des jeux de transmission.

Il va de soi que, selon une variante de réalisation, l'organe menant peut être constitué par deux pignons hélicoïdaux tels que décrits précédemment et l'organe mené par un seul pignon hélicoïdal.

Dans le cas où les axes des première et seconde parties d'arbre de direction font entre eux un angle obtus (Fig. 9), les organes menant 205 et mené 206 sont constitués par des pignons hélicoïdaux gauches.

L'un desdits organes menant ou mené est constitué par deux pignons hélicoïdaux gauches dont les surfaces en regard comportent un évidement annulaire dans lequel sont disposés des moyens élastiques tendant à les écarter l'un de l'autre. Lesdits deux pignons sont également montés déplaçables l'un par rapport à l'autre parallèlement à l'axe de la partie d'arbre de direction sur laquelle ils sont disposés.

Les différents paramètres de ces pignons sont déterminés de manière analogue à celle décrite précédemment.

## Revendications

1. Bloc de direction d'un véhicule automobile, comprenant une colonne de direction (5), un volant (1 ; 101) de direction et un coussin central (10) sur lequel est disposé au moins un organe de commande (9) destiné à la commande de différents organes du véhicule, ladite colonne de direction et ledit coussin central étant fixes, le volant de direction étant solidaire d'une première partie (2 ; 102 ; 121 ; 202) d'un arbre de direction, creuse et montée à rotation autour d'une pièce tubulaire (7) solidaire de la colonne de direction et du coussin central, et dans laquelle est disposée un organe de transmission des informations (8 ; 108) issues dudit au moins un organe de commande (9), vers une partie fixe du véhicule, ladite première partie d'arbre de direction étant reliée à une seconde (15 ; 104 ; 122 ; 204) partie d'arbre de direction, par l'intermédiaire d'un dispositif d'accouplement, comprenant un premier organe d'accouplement intermédiaire (12 ; 111 ; 116 ; 126) coopérant avec un organe menant (6 ; 109 ; 117 ; 123) solidaire de la première partie d'arbre de direction de manière à former un premier couple, et un second organe d'accouplement intermédiaire (13 ; 112 ; 118 ; 127) coopérant avec un organe mené (14 ; 113 ; 119 ; 124) solidaire de la seconde partie d'arbre de direction de manière à former un second couple, lesdites première et seconde parties d'arbre de direction étant espacées d'une distance permettant le passage de l'organe de transmission des informations, caractérisé en ce que les organes d'au moins l'un des couples sont constitués par des pignons hélicoïdaux, l'un étant constitué par deux pignons hélicoïdaux (12a, 12b, 13a, 13b ; 112a, 112b ; 116a, 116b ; 126a, 126b ; 127a, 127b) sollicités dans des directions opposées, parallèles à l'axe du dispositif d'accouplement par l'intermédiaire de moyens élastiques (18, 19 ; 114 ; 120 ; 128, 129) disposés entre les deux pignons, pour constituer des moyens de rattrapage automatique des jeux de transmission dudit dispositif d'accouplement.

2. Bloc de direction selon la revendication 1, caractérisé en ce que l'organe de transmission des informations (8 ; 108) issues dudit au moins un organe de commande (9) est constitué par un câble électrique.

3. Bloc de direction selon l'une quelconque des revendications précédentes, caractérisé en ce que les axes des première et seconde parties de l'arbre de direction sont parallèles et en ce que les axes des organes menant (6) et mené (14) sont parallèles.

4. Bloc de direction selon la revendication 3, caractérisé en ce que l'axe a-a' de l'organe de transmission (11) est parallèle aux axes des première et seconde parties de l'arbre de direction.

5. Bloc de direction selon l'une quelconque des revendications précédentes, caractérisé en ce que les première et seconde parties (2, 15) de l'arbre de direction sont alignées.

6. Bloc de direction selon l'une quelconque des revendications précédentes, caractérisé en ce que les organes menant et mené (6, 14) sont constitués par des pignons hélicoïdaux.

7. Bloc de direction selon la revendication 6, caractérisé en ce que les organes d'accouplement intermédiaires (12, 13) sont constitués chacun par deux pignons hélicoïdaux (12a, 12b, 13a, 13b) dont les surfaces en regard sont pourvues d'un évidement annulaire dans lequel est disposé un moyen élastique (18, 19) et en ce que lesdits pignons hélicoïdaux de chaque organe d'accouplement intermédiaire sont libres de se déplacer parallèlement à l'axe a-a' de l'organe de transmission (11), l'un par rapport à l'autre.

8. Bloc de direction selon la revendication 1 ou 2, caractérisé en ce que les axes des première et seconde parties de l'arbre de direction font entre eux un angle obtus.

9. Bloc de direction selon la revendication 8, caractérisé en ce que l'axe (X-X ; Xa-Xa) de l'organe de transmission (110 ; 115) est disposé dans un plan défini par les axes (Y-Y, Z-Z ; Ya-Ya, Za-Za) desdites première et seconde parties de l'arbre de direction.

10. Bloc de direction selon la revendication 9, caractérisé en ce que l'axe de l'organe de transmission (115) est parallèle à l'axe de la première partie (102) de l'arbre de direction, en ce que l'organe menant (117) et l'organe d'accouplement intermédiaire (116) coopérant avec celui-ci sont constitués par des pignons hélicoïdaux et en ce que l'organe mené (119) et l'organe d'accouplement intermédiaire (118) coopérant avec celui-ci, sont constitués par des pignons coniques de demi-angle au sommet égal à la moitié dudit angle obtus.

11. Bloc de direction selon la revendication 10, caractérisé en ce que l'organe d'accouplement intermédiaire (116) coopérant avec l'organe menant (117) ou l'organe menant lui-même, est constitué par deux pignons hélicoïdaux (116a, 116b) dont les surfaces en regard sont pourvues d'un évidement annulaire dans lequel sont disposés des moyens élastiques (120) et en ce que lesdits deux pignons hélicoïdaux sont libres de se déplacer l'un par rapport à l'autre, parallèlement à l'axe (Xa-Xa) de l'organe de transmission.

12. Bloc de direction selon la revendication 11, caractérisé en ce que l'organe d'accouplement intermédiaire (116) est constitué desdits deux pignons hélicoïdaux (116a, 116b).

13. Bloc de direction selon la revendication 8, caractérisé en ce que l'axe de l'organe de transmission (110) est parallèle à l'axe de la seconde partie (104) de l'arbre de direction, en ce que l'organe menant (109) et l'organe d'accouplement intermédiaire (111) coopérant avec celui-ci sont constitués par des pignons coniques de demi-angle au sommet égal à la moitié dudit angle obtus et en ce que l'organe mené (113) et l'organe d'accouplement intermédiaire (112) coopérant avec celui-ci sont constitués par des pignons hélicoïdaux.

14. Bloc de direction selon la revendication 13, caractérisé en ce que l'organe d'accouplement intermédiaire (112) coopérant avec l'organe mené (113) ou l'organe mené lui-même, est constitué par deux pignons hélicoïdaux (112a, 112b) dont les surfaces en regard sont pourvues d'un évidement annulaire dans lequel sont disposés des moyens élastiques (114) et en ce que lesdits deux pignons hélicoïdaux sont libres de se déplacer l'un par rapport à l'autre, parallèlement à l'axe (X-X) de l'organe de transmission.

15. Bloc de direction selon la revendication 14, caractérisé en ce que l'organe d'accouplement intermédiaire (112) est constitué desdits deux pignons hélicoïdaux (112a, 112b).

16. Bloc de direction selon la revendication 8, caractérisé en ce que l'axe (Xb-Xb) de l'organe de transmission (125) est disposé dans un plan parallèle à un plan (P) défini par les axes (Yb-Yb, Zb-Zb) des première et seconde parties (121, 122) de l'arbre de direction.

17. Bloc de direction selon la revendication 16, caractérisé en ce que les organes menant (123) et mené (124) sont disposés respectivement sur les première et seconde parties (121, 122) de l'arbre de direction, à une distance égale du point d'intersection (O) des axes des première et seconde parties de l'arbre de direction et en ce que l'axe (Xb-Xb) de l'organe de transmission (125) est parallèle à une droite (A) joignant le centre des organes menant et mené.

18. Bloc de direction selon la revendication 17, caractérisé en ce que les organes menant, d'accouplement intermédiaires et mené, sont constitués par des pignons hélicoïdaux gauches, identiques et d'angle d'hélice égal à la moitié de l'angle obtus.

19. Bloc de direction selon la revendication 17, caractérisé en ce que les organes d'accouplement intermédiaires (126, 127) sont constitués chacun par deux pignons (126a, 126b, 127a, 127b) dont les surfaces en regard sont pourvues d'un évidement annulaire dans lequel sont disposés des moyens élastiques (128, 129) et en ce que lesdits pignons hélicoïdaux de chaque organe d'accouplement intermédiaire sont libres de se déplacer l'un par rapport à l'autre, parallèlement à l'axe (Xb-Xb) de l'organe de transmission (125).

20. Bloc de direction selon la revendication 1 ou 2, caractérisé en ce que les axes des première et seconde parties d'arbre de direction sont parallèles, en ce que l'un desdits organes menant ou mené, est constitué par un pignon hélicoïdal (201) et l'autre par deux pignons hélicoïdaux (203a, 203b) dont les surfaces en regard sont pourvues d'un évidement annulaire dans lequel sont disposés des moyens élastiques (203c), et en ce que lesdits deux pignons hélicoïdaux (203a, 203b) sont libres de se déplacer parallèlement aux axes desdites première et seconde parties d'arbre de direction, l'un par rapport à l'autre.

21. Bloc de direction selon la revendication 1 ou 2, caractérisé en ce que les axes de première et seconde parties d'arbre de direction font entre eux un angle obtus, en ce que l'un desdits organes menant ou mené (205, 206) est constitué par un pignon hélicoïdal gauche et l'autre par deux pignons hélicoïdaux gauches dont les surfaces en regard sont pourvues d'un évidement annulaire dans lequel sont disposés des moyens élastiques et en ce que lesdits deux pignons hélicoïdaux gauches sont libres de se déplacer parallèlement à l'axe de la partie d'arbre de direction sur laquelle ils sont disposés, l'un par rapport à l'autre.

22. Bloc de direction selon la revendication 7, 11, 14, 19, 20 ou 21, caractérisé en ce que les moyens élastiques (18, 19 ; 114 ; 120 ; 128 ; 129 ; 203c) sont constitués par un ressort exerçant sur lesdits pignons une action qui tend à les écarter l'un par rapport à l'autre.

23. Bloc de direction selon l'une quelconque des revendications précédentes, caractérisé en ce que le volant de direction (1) étant claveté sur la première partie (2) de l'arbre de direction, des moyens sont prévus pour coopérer avec la pièce tubulaire (7) afin de rendre le volant de direction (1) solidaire en translation de ladite première partie (2) de l'arbre de transmission.

24. Bloc de direction selon la revendication 23, caractérisé en ce que les moyens destinés à rendre solidaire en translation le volant de direction (1) et la première partie (2) de l'arbre de direction sont constitués par un premier manchon (1) comportant à l'une de ses extrémités, une collerette (21a) faisant saillie vers l'extérieur et s'étendant au-dessus d'une partie du volant de direction (1) et à l'autre extrémité un bossage annulaire (21b) dont les surfaces viennent coopérer avec les surfaces correspondantes d'un évidement annulaire (2d) ménagé dans la paroi interne de la première partie de l'arbre de direction.

25. Bloc de direction selon la revendication 24, caractérisé en ce qu'un second manchon (22) comportant à l'une de ses extrémités une collerette (22a) faisant saillie vers l'extérieur est disposé entre le premier manchon (21) et la pièce tubulaire (7) de façon à coopérer avec celle-ci pour presser ledit premier manchon contre la surface interne de ladite première partie d'arbre.

26. Bloc de direction selon la revendication 25, caractérisé en ce que la pièce tubulaire (7) comporte à son extrémité supérieure des organes élastiques (7a) destinés à retenir en position le coussin central (10).

## Claims

1. A steering unit for a motor vehicle, comprising a steering column (5), a steering wheel (1 ; 101) and a central pad (10) on which at least one control element (9) is disposed for controlling various devices of the vehicle, the steering column and the pad being fixed, the steering wheel being connected to a first part (2 ; 102 ; 121 ; 202) of a steering shaft which is hollow and rotatably mounted around a tubular element (7) connected to the steering column and the central pad and receiving a data transmitting element (8 ; 108) for transmitting data from at least one control element (9) to a fixed part of the vehicle, said first steering shaft part being connected to a second steering shaft part (15 ; 104 ; 122 ; 204) via a coupling device comprising a first intermediate coupling element (12 ; 111 ; 116 ; 126) cooperating with a driving element (6 ; 109 ; 117 ; 123) connected to the first steering shaft part so as to form a first couple, and a second intermediate coupling element (13 ; 112 ; 118 ; 127) cooperating with a driven element (14 ; 113 ; 119 ; 124) connected to the second steering shaft part so as to form a second couple, said first and second steering shaft parts being spaced apart by a distance allowing the passage of the data transmitting element, characterized in that the elements of at least one of the couples are formed by helical gear pinions, one being formed by two helical gear pinions (12a, 12b, 13a, 13b ; 112a, 112b ; 116a, 116b ; 126a, 126b ; 127a, 127b) urged in opposite directions parallel with the axis of the coupling device by resilient means (18, 19 ; 114 ; 120 ; 128, 129) disposed between the two pinions to form automatic take-up means for the transmission clearances of the coupling device.

2. A steering unit according to claim 1, characterized in that the data transmitting element (8 ; 108) for transmitting data from at least one control element (9) is formed by an electric cable.

3. A steering unit according to either of the preceding claims, characterized in that the axes of the first and second steering shaft parts are parallel and the axes of the driving element (6) and the driven element (14) are parallel.

4. A steering unit according to claim 3, characterized in that the axis a-a' of the transmission element (11) is parallel with the axes of the first and second steering shaft parts.

5. A steering unit according to any of the preceding claims, characterized in that the first and second steering shaft parts (2, 15) are aligned.

6. A steering unit according to any of the preceding claims, characterized in that the driving and driven elements (6, 14) are formed by helical gear pinions.

7. A steering unit according to claim 6, characterized in that the intermediate coupling elements (12, 13) are each formed by two helical gear pinions (12a, 12b, 13a, 13b) whose confronting surfaces are formed with an annular recess in which a resilient means (18, 19) is disposed, the helical gear pinions of each intermediate coupling element being free to move in relation to one another in a direction parallel with the axis a-a' of the transmitting element (11).

8. A steering unit according to claims 1 or 2, characterized in that the axes of the first and second steering shaft parts make an obtuse angle with one another.

9. A steering unit according to claim 8, characterized in that the axis (X-X ; Xa-Xa) of the transmission element (110 ; 115) is disposed in a plane defined by the axes (Y-Y, Z-Z ; Ya-Ya, Za-Za) of the first and second steering shaft parts.

10. A steering unit according to claim 9, characterized in that the axis of the transmitting element (115) is parallel with the axis of the first part (102) of the driving shaft, the driving element (117) and the intermediate coupling element (116) cooperating therewith are formed by helical gear pinions, and the driven element (119) and the intermediate coupling element (118) cooperating therewith are formed by bevel gear pinions having a semi-apex angle equal to one half of said obtuse angle.

11. A steering unit according to claim 10, characterized in that the intermediate coupling element (116) cooperating with the driving element (117) or the driving element itself is formed by two helical gear pinions (116a, 116b) whose confronting surfaces are formed with an annular recess receiving resilient means (120), and the two helical gear pinions are free to move in relation to one another in a direction parallel with the axis (Xa-Xa) of the transmission element.

12. A steering unit according to claim 11, characterized in that the intermediate coupling element (116) is formed by said two helical gear pinions (116a, 116b).

13. A steering unit according to claim 8, characterized in that the axis of the transmission element (110) is parallel with the axis of the second steering shaft part (104), the driving element (109) and the intermediate coupling element (111) cooperating therewith are formed by bevel gear pinions having a semi-apex angle equal to one half of said obtuse angle, and the driven element (113) and the intermediate coupling element (112) cooperating therewith are formed by helical gear pinions.

14. A steering unit according to claim 13, characterized in that the intermediate coupling element (112) cooperating with the driven element (113) or the driven element itself is formed by two helical gear pinions (112a, 112b) whose confronting surfaces are formed with an annular recess which receives resilient means (114), and the two helical gear pinions are free to move in relation to one another parallel with the axis (X-X) of the transmission element.

15. A steering unit according to claim 14, characterized in that the intermediate coupling element (112) is formed by said two helical gear pinions (112a, 112b).

16. A steering unit according to claim 8, characterized in that the axis (Xb-Xb) of the transmission element (125) is disposed in a plane parallel with a plane (P) defined by the axes (Yb-Yb, Zb-Zb) of the first and second steering shaft parts (121, 122).

17. A steering unit according to claim 16, characterized in that the driving element (123) and the driven element (124) are disposed respectively on the first and second parts (121, 122) of the steering shaft at an equal distance from the point of intersection (O) of the axes of the first and second steering shaft parts, and the axis (Xb-Xb) of the transmission element (125) is parallel with a straight line (A) joining the centre of the driving and driven elements.

18. A steering unit according to claim 17, characterized in that the driving element, the intermediate coupling element and the driven element are formed by identical left-hand helical gear pinions having a helix angle equal to one half of the obtuse angle.

19. A steering unit according to claim 18, characterized in that the intermediate coupling elements, (126, 127) are each formed by two gear pinions (126a, 126b, 127a, 127b) whose confronting surfaces are formed with an annular recess receiving resilient means (128, 129), and the helical gear pinions of each intermediate coupling element are free to move in relation to one another in a direction parallel with the axis (Xb-Xb) of the transmission element (125).

20. A steering unit according to claims 1 or 2, characterized in that the axes of the first and second driving shaft parts are parallel, one of the said driving or driven elements is formed by a helical gear pinion (201) and the other by two helical gear pinions (203a, 203b) whose confronting surfaces are formed with an annular recess receiving resilient means (203c), and said two helical gear pinions (203a, 203b) are free to move in relation to one another in a direction parallel with the axes of the said first and second steering shaft parts.

21. A steering unit according to claims 1 or 2, characterized in that the axes of the first and second steering shaft parts make an obtuse angle with one another, one of said driving or driven elements (205, 206) is formed by a left-hand helical gear pinion and the other by two left-hand helical gear pinions having confronting surfaces formed with an annular recess receiving resilient means, and said two left-hand helical gear pinions are free to move in relation to one another in a direction parallel with the axis of the steering shaft part on which they are disposed.

22. A steering unit according to claims 7, 11, 14, 19, 20 or 21, characterized in that the resilient means (18, 19 ; 114 ; 120, 128, 129 ; 203c) are formed by a spring exerting on said gear pinions an action which biases them away from one another.

23. A steering unit according to any of the preceding claims, characterized in that the steering wheel (1) being keyed to the first part (2) of the steering shaft, means are provided for cooperating with the tubular element (7) so as to render the steering wheel (1) fixed in translation to said first part (2) of the transmission shaft.

24. A steering unit according to claim 23, characterized in that the means for rendering the steering wheel (1) fixed in translation to the first part (2) of the steering shaft are formed by a first sleeve (1) having at one of its ends a flange (21a) which projects outwardly and extends above a part of the steering wheel (1), and at the other end an annular boss (21b) whose surfaces cooperate with matching surfaces of an annular recess (2d) with which the inner wall of the first steering shaft part is formed.

25. A steering unit according to claim 24, characterized in that a second sleeve (22) having at one of its ends an outwardly projecting flange (22a) is disposed between the first sleeve (21) and the tubular element (7) so as to cooperate therewith to press said first sleeve against the inner surface of said first steering shaft part.

26. A steering unit according to claim 25, characterized in that the tubular element (7) comprises at its upper end resilient means (7a) adapted to retain the central pad (10) in position.

## Patentansprüche

1. Lenkungsblock eines Kraftfahrzeugs mit einer Lenksäule (5), einem Lenkrad (1 ; 101) und einem zentralen Kissen (10) auf dem wenigstens ein Betätigungsorgan (9) angeordnet ist, das für die Betätigung von verschiedenen Organen des Fahrzeugs bestimmt ist, wobei die Lenksäule und das zentrale Kissen feststehen, das Lenkrad einstückig mit einem ersten Abschnitt (2 ; 102 ; 121 ; 202) einer hohlen Lenkachse oder -welle ausgebildet ist und zur Drehung um ein rohrförmiges Stück (7) angeordnet ist, das mit der Lenksäule und dem zentralen Kissen verbunden ist, und in dem ein Übertragungsorgan von Informationen (8 ; 108) angeordnet ist, welche von wenigstens einem Betätigungsorgan (9) zu einem festen Abschnitt des Fahrzeugs ausgegeben werden, wobei der erste Abschnitt der Lenkachse mit einem zweiten Abschnitt (15 ; 104 ; 122 ; 204) der Lenkachse mittels einer Kopplungsvorrichtung verbunden ist, die ein erstes Zwischenkopplungsorgan (12 ; 111 ; 116 ; 126) aufweist, das mit einem treibenden Organ (6 ; 109 ; 117 ; 123) das mit dem ersten Abschnitt der Lenkachse verbunden ist, derart zusammenwirkt, um eine erste Kupplung zu bilden, und ein zweites Zwischenkopplungsorgan (13 ; 112 ; 118 ; 127) aufweist, das mit einem mit dem zweiten Abschnitt der Lenkachse verbundenen angetriebenen Organ (14 ; 113 ; 119 ; 124) derart zusammenwirkt, um eine zweite Kopplung zu bilden, wobei der erste von dem zweiten Abschnitt der Lenkachse in einem Abstand angeordnet ist, der den Hindurchtritt des Übertragungsorgans der Informationen erlaubt, dadurch gekennzeichnet, daß die Organe wenigstens einer der Kopplungen aus spiralförmigen Ritzeln gebildet sind, wobei eines aus zwei spiralförmigen Ritzeln (12a, 12b, 13a, 13b ; 112a, 112b ; 116a, 116b ; 126a, 126b ; 127a, 127b) gebildet ist, die in zwei entgegengesetzte Richtungen, parallel zur Achse der Kopplungsvorrichtung mittels elastischer Einrichtungen (18, 19 ; 114 ; 120 ; 128, 129) beansprucht bzw. belastet werden, die zwischen den beiden Ritzeln angeordnet sind, um automatische Aufnahme- oder Auffangeinrichtungen der Übertragungsspiele der Kopplungsvorrichtung zu bilden.

2. Lenkungsblock nach Anspruch 1, dadurch gekennzeichnet, daß das Übertragungsorgan der Informationen (8 ; 108), die von dem wenigstens einen Betätigungsorgan (9) ausgegeben werden, von einem elektrischen Kabel gebildet wird.

3. Lenkungsblock nach einem der vorhergehenden Ansprüche, dadurch gekennzeichnet, daß die Achsen des ersten und zweiten Abschnitts der Lenkachse oder Lenkwelle parallel sind, und daß die Achsen des treibenden Organs (6) und des angetriebenen Organs (14) parallel sind.

4. Lenkungsblock nach Anspruch 3, dadurch gekennzeichnet, daß die Achse a-a' des Übertragungsorgans (11) parallel zu den Achsen des ersten und zweiten Abschnitts der Lenkachse verläuft.

5. Lenkungsblock nach einem der vorhergehenden Ansprüche, dadurch gekennzeichnet, daß der erste und der zweite Abschnitt (2, 15) der Lenkachse zueinander ausgerichtet sind.

6. Lenkungsblock nach einem der vorhergehenden Ansprüche, dadurch gekennzeichnet, daß das antreibende Organ (6) und das angetriebene Organ (14) von spiralförmigen Ritzeln gebildet sind.

7. Lenkungsblock nach Anspruch 6, dadurch gekennzeichnet, daß die Zwischenkopplungsorgane (12, 13) jedes durch zwei spiralförmige Ritzel (12a, 12b, 13a, 13b) gebildet sind, deren einander gegenüberliegende Seiten mit einer ringförmigen Ausnehmung versehen sind, in der eine elastische Einrichtung (18, 19) angeordnet ist, und daß die spiralförmigen Ritzel jedes Zwischenkopplungsorgans frei sind, sich parallel zur Achse a-a' des Übertragungsorgans (11), das eine gegenüber dem anderen, zu bewegen.

8. Lenkungsblock nach Anspruch 1 oder 2, dadurch gekennzeichnet, daß die Achse des ersten Abschnitts und die Achse des zweiten Abschnitts der Lenkachse untereinander einen stumpfen Winkel bilden.

9. Lenkungsblock nach Anspruch 8, dadurch gekennzeichnet, daß die Achse (X-X ; Xa-Xa) des Übertragungsorgans (110 ; 115) in einer Ebene angeordnet ist, die durch die Achsen (Y-Y, Z-Z ; Ya-Ya, Za-Za) des ersten und zweiten Abschnitts der Lenkachse definiert ist.

·10. Lenkungsblock nach Anspruch 9, dadurch gekennzeichnet, daß die Achse des Übertragungsorgans (115) parallel zur Achse des ersten Abschnitts (102) der Lenkachse verläuft, und daß das treibende Organ (117) und das Zwischenkopplungsorgan (116), welches mit diesem zusammenwirkt, aus spiralförmigen Ritzeln gebildet sind, und daß das angetriebene Organ (119) und das Zwischenkopplungsorgan (118), daß mit diesem zusammenwirkt, aus konischen Ritzeln mit halbem Kegelwinkel, der gleich der Hälfte des stumpfen Winkels ist, gebildet sind.

11. Lenkungsblock nach Anspruch 10, dadurch gekennzeichnet, daß das Zwischenkopplungsorgan (116), welches mit dem antreibenden Organ (117) zusammenwirkt, oder das antreibende Organ selbst aus zwei spiralförmigen Ritzeln (116a, 116b) gebildet ist, dessen gegenüberliegende Seiten mit einer ringförmigen Ausnehmung versehen sind, in denen elastische Einrichtungen (120) angeordnet sind, und daß die spiralförmigen Ritzel, das eine gegenüber dem anderen, sich frei parallel zur Achse (Xa-Xa) des Übertragungsorgans bewegen können.

12. Lenkungsblock nach Anspruch 11, dadurch gekennzeichnet, daß das Zwischenkopplungsorgan (116) aus den beiden spiralförmigen Ritzeln (116a, 116b) gebildet ist.

13. Lenkungsblock nach Anspruch 8, dadurch gekennzeichnet, daß die Achse des Übertragungsorgans (110) parallel zur Achse des zweiten Abschnitts (104) der Lenkachse verläuft, daß das antreibende Organ (109) und das Zwischenkopplungsorgan (111), das mit diesen zusammenwirkt, aus konischen Ritzeln mit halbem Kegelwinkel gebildet ist, der gleich der Hälfte des stumpfen Winkels ist, und daß das angetriebene Organ (113) und das Zwischenkopplungsorgan (112), das mit diesem zusammenwirkt, aus spiralförmigen Ritzeln gebildet ist.

14. Lenkungsblock nach Anspruch 13, dadurch gekennzeichnet, daß das Zwischenkopplungsorgan (112), das mit dem angetriebenen Organ (113) zusammenwirkt, oder das angetriebene Organ selbst aus zwei spiralförmigen Ritzeln (112a, 112b) gebildet ist, deren gegenüberliegende Seiten mit einer ringförmigen Ausnehmung versehen sind, in denen elastische Mittel (114) angeordnet sind, und daß die spiralförmigen Ritzel sich frei, das eine gegenüber dem anderen, parallel zur Achse (X-X) des Übertragungsorgans bewegen können.

15. Lenkungsblock nach Anspruch 14, dadurch gekennzeichnet, daß das Zwischenkopplungsorgan (112) aus den beiden spiralförmigen Ritzeln (112a, 112b) gebildet ist.

16. Lenkungsblock nach Anspruch 8, dadurch gekennzeichnet, daß die Achse (Xb-Xb) des Übertragungsorgans (125) in einer Ebene angeordnet ist, die parallel zu einer Ebene (P) verläuft, die durch Achsen (Yb-Yb, Zb-Zb) des ersten und zweiten Abschnitts (121, 122) der Lenkachse definiert ist.

17. Lenkungsblock nach Anspruch 16, dadurch gekennzeichnet, daß das treibende Organ (123) und das angetriebene Organ (124) auf dem ersten Abschnitt (121) bzw. dem zweiten Abschnitt (122) der Lenkachse mit einem gleichen Abstand vom Schnittpunkt (O) der Achsen des ersten und zweiten Abschnitts der Lenkachse angeordnet sind, und daß die Achse (Xb-Xb) des Übertragungsorgans (125) zu einer Geraden (A) parallel verläuft, die das Zentrum des treibenden Organs mit dem Zentrum des angetriebenen Organs verbindet.

18. Lenkungsblock nach Anspruch 17, dadurch gekennzeichnet, daß das treibende Organ, das Zwischenkopplungsorgan und das angetriebene Organ aus linksgängigen spiralförmigen Ritzeln gebildet sind, die identisch sind und einen Schrägungswinkel aufweisen, der gleich der Hälfte des stumpfen Winkels ist.

19. Lenkungsblock nach Anspruch 17, dadurch gekennzeichnet, daß die Zwischenkopplungsorgane (126, 127) jedes durch zwei Ritzel (126a, 126b, 127a, 127b) gebildet sind, deren gegenüberliegende Seiten mit einer ringförmigen Ausnehmung versehen sind, in der elastische Einrichtungen (128, 129) angeordnet sind, und daß die spiralförmigen Ritzel jedes Zwischenkopplungsorgans frei sind, sich, das eine gegenüber dem anderen, parallel zur Achse (Xb-Xb) des Übertragungsorgans (125), zu bewegen.

20. Lenkungsblock nach Anspruch 1 oder 2, dadurch gekennzeichnet, daß die Achsen des ersten und zweiten Abschnitts der Lenkachse parallel sind, daß ein Organ der angetriebenen oder treibenden Organe durch ein spiralförmiges Ritzel (201) gebildet ist, und das andere durch zwei spiralförmige Ritzel (203a, 203b) gebildet ist, deren einander gegenüberliegende Seiten mit einer ringförmigen Ausnehmung versehen sind, in der elastische Einrichtung (203c) angeordnet sind, und daß die spiralförmigen Ritzel (203a, 203b) frei sind, sich parallel zu den Achsen des ersten und zweiten Abschnitts der Lenkachse, das eine gegenüber dem anderen, zu bewegen.

21. Lenkungsblock nach Anspruch 1 oder 2, dadurch gekennzeichnet, daß die Achsen des ersten und zweiten Abschnitts der Lenkachse miteinander einen stumpfen Winkel einschließen, daß eines der Organe, treibend oder angetrieben (205, 206), aus einem linken bzw. linksgängigen spiralförmigen Ritzel und das andere aus zwei linksgängigen spiralförmigen Ritzeln gebildet ist, deren einander gegenüberliegende Seiten mit einer ringförmigen Ausnehmung versehen sind, in der elastische Einrichtungen angeordnet sind, und daß die linksgängigen spiralförmigen Ritzel frei sind, sich parallel zur Achse des Abschnitts der Lenkachse auf dem sie angeordnet sind, das eine gegenüber dem anderen, zu bewegen.

22. Lenkungsblock nach Anspruch 7, 11, 14, 19, 20 oder 21, dadurch gekennzeichnet, daß die elastischen Einrichtungen (18, 19 ; 114 ; 120 ; 128, 129 ; 203c) aus einer Feder gebildet sind, die auf die Ritzel eine Wirkung ausübt, die sie, das eine gegenüber dem anderen auseinanderdrängt.

23. Lenkungsblock nach einem der vorhergehenden Ansprüche, dadurch gekennzeichnet, daß das Lenkrad (1) auf den ersten Abschnitt (2) der Achse aufgekeilt ist, Mittel vorgesehen sind, um mit dem rohrförmigen Stück (7) zusammenzuwirken, um bei Translation des ersten Abschnitts (2) der Übertragungsachse mit diesen zusammenzubringen.

24. Lenkungsblock nach Anspruch 23, dadurch gekennzeichnet, daß die Mittel, die dazu bestimmt sind, das Lenkrad (1) mit dem ersten Abschnitt (2) der Lenkachse bei Translation zusammen zu bewegen, durch eine erste Muffe (1) gebildet sind, die an einem ihrer Enden einen Kragen (21a) aufweist, der nach außen vorspringt und sich oberhalb eines Abschnitts des Lenkrads (1) erstreckt, und am anderen Ende eine ringförmige Auskragung (21b) aufweist, deren Oberflächen in Zusammenwirkung mit entsprechenden Oberflächen einer ringförmigen Ausnehmung (2d) kommen, die in der inneren Seitenwand des ersten Abschnitts der Lenkachse angeordnet ist.

25. Lenkungsblock nach Anspruch 24, dadurch gekennzeichnet, daß eine zweite Muffe (22) die an einem ihrer Enden einen Kragen (22a) aufweist, der nach außen vorspringt und zwischen der ersten Muffe (21) und dem rohrförmigen Stück (7) derart angeordnet ist, daß sie mit diesem zusammenwirkt, um die erste Muffe gegen die Innenseite des ersten Abschnitts der Achse zu drücken.

26. Lenkungsblock nach Anspruch 25, dadurch gekennzeichnet, daß das rohrförmige Stück (7) an seinem oberen Ende elastische Organe (7a) aufweist, die dazu bestimmt sind, das zentrale Kissen (10) in Position zu halten.

FIG. 1

# FIG. 2

FIG. 3

101

102

103

104

105

106

107

FIG.4

Y

102

X

111

110

112a

109

112

108

Y

112b

Z

114

X

104

113

Z

126

126b

126a

127

Xb

129

127b

127a

125

128

Xb

108

123

Yb

Zb

O Yb

Yb

Za

A

121

Zb

122

124

P

FIG. 6

FIG.5

Ya

102

117

Xa

120

116

116 a

116 b

115

Ya Za

108

118

Xa

104

119

126

127

121

124

125

123

122

FIG.7

FIG. 8

FIG.9